# EUROPEAN PATENT APPLICATION

(11) **EP 3 168 829 A1**
(43) Date of publication of application: **17.05.2017**
(21) Application number: 16164078.4
(22) Date of filing: 06.04.2016
(51) Int. Cl.: G09G 3/20

(54) **METHOD AND DEVICE FOR CONTENT DISPLAYING**

(30) Priority: 22.10.2015 CN 201510696526
(71) Applicant: Xiaomi Inc., Beijing 100085 (CN)
(72) Inventor: LI, Guosheng, 100085 Haidian District (CN); LIU, Anyu, 100085 Haidian District (CN); YANG, Dongdong, 100085 Haidian District (CN)
(74) Representative: Steinbauer, Florian

(57) **Abstract**

The present disclosure is related to a method and device for content displaying. The method includes: detecting (201, 302) whether there is any change in display content on a display; and controlling (202, 303) the display to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected, wherein m and n are positive integers. Thus, screen flicker caused by reduction of refresh frequency of a display while the display content is kept unchanged can be avoided.

## Description

### FIELD

The present disclosure generally relates to the field of image processing, and more particularly, to a method and device for content displaying.

### BACKGROUND

The power consumption of a display, which constitutes a large amount of power consumption of a smart device, directly impacts battery lifetime of the smart device. Traditionally, reduction of power consumption of a display is achieved by reducing refresh frequency of the display. However, reduction of refresh frequency of a display will result in screen flicker.

### SUMMARY

In view of the fact in related arts, the disclosure provides a method and device for content displaying.

According to a first aspect of the present disclosure, there is provided a method for content displaying, including: detecting whether there is any change in a display content on a display (i.e. content to be displayed); and controlling the display to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected, wherein m and n are positive integers.

Advantageously, if the display unit is a set of m rows of pixels divided into row, the first portion of the row of the display unit comprises i first cells, the second portion of the row of the display unit comprises j second cells, and the first cells are alternate with the second cells, wherein i and j are positive integers, and wherein each first cell comprises p successive pixels, and each second cell comprises q successive pixels, wherein p and q are positive integers.

Advantageously, in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display unit are staggered with each other in the column direction.

Advantageously, each pixel is electrically connected to a driving integrated circuit IC through a corresponding enable line and each pixel is electrically connected to a data line through a switch, and wherein said controlling the display to alternately update the display data corresponding to a first portion and a second portion of a row of a display unit includes: controlling, by the driving IC, switches for all the pixels within each of the first cells to be in a first state and switches for all the pixels within each of the second cells to be in a second state when an odd numbered update is conducted; and controlling, by the driving IC, the switches for all the pixels within each of the first cells to be in the second state and the switches for all the pixels within each of the second cells to be in the first state when an even numbered update is conducted.

Advantageously, if the display units each are a set of n column of pixels divided into columns, the third portion comprises k third cells, and the fourth portion comprises 1 fourth cells, and the third cells are alternate with the fourth cells, wherein k and 1 are positive integers, and wherein each third cell comprises r successive pixels, and each fourth cell comprises s successive pixels, wherein r and s are positive integers.

Advantageously, in two adjacent columns of the display unit, all the third cells of a first column of the display unit and all the third cells of a second column of the display unit are staggered with each other in the row direction; and in the two adjacent columns of the display unit, all the fourth cells of the first column of the display unit and all the fourth cells of the second column of the display unit are staggered with each other in the row direction.

Advantageously, each pixel is electrically connected to a driving integrated circuit IC through a corresponding enable line and each pixel is electrically connected to a data line through a switch, and wherein said controlling the display to alternately update display data corresponding to a third portion and a fourth portion of a column of the display unit include: controlling, by the driving IC, switches for all the pixels within each of the third cells to be in a first state and switches for all the pixels within each of the fourth cells to be in a second state when an odd numbered update is conducted; and controlling, by the driving IC, the switches for all the pixels within each of the third cells to be in the second state and controlling the switches for all the pixels within each of the fourth cells to be in the first state when an even numbered update is conducted.

According to a second aspect of the present disclosure, there is provided a device for content displaying, including: a detection module configured to detect whether there is any change in display content on a display (i.e. content to be displayed); and a control module configured to control the display to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected by the detection module, wherein m and n are positive integers.

Advantageously, if the display unit is a set of m rows of pixels divided into rows, the first portion of the row of the display unit comprises i first cells, the second portion of the row of the display unit comprises j second cells, and the first cells are alternate with the second cells, wherein i and j are positive integers, and wherein each first cell comprises p successive pixels, and each second cell comprises q successive pixels, wherein p and q are positive integers.

Advantageously, in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display unit are staggered with each other in the column direction.

Advantageously, the control module includes: a first control sub-module configured to control, by a driving integrated circuit IC, switches for all the pixels within each of the first cells to be in a first state and switches for all the pixels within each of the second cells to be in a second state when an odd numbered update is conducted; a second control sub-module configured to control, by the driving IC, the switches for all the pixels within each of the first cells to be in the second state and the switches for all the pixels within each of the second cells to be in the first state when an even numbered update is conducted, wherein each pixel is electrically connected to the driving IC through a corresponding enable line and each pixel is electrically connected to a data line through a switch.

Advantageously, if the display unit is a set of n columns of pixels divided into columns, the third portion comprises k third cells, the fourth portion comprises 1 fourth cells, and the third cells are alternate with the fourth cells, wherein k and 1 are positive integers, wherein each third cell comprises r successive pixels, and each fourth cell comprises s successive pixels, wherein r and s are positive integers.

Advantageously, in two adjacent columns of the display unit, all the third cells of a first column of the display unit and all the third cells of a second column of the display unit are staggered with each other in the row direction; and in the two adjacent columns of the display unit, all the fourth cells of the first column of the display unit and all the fourth cells of the second column of the display unit are staggered with each other in the row direction.

Advantageously, the control module comprises: a third control sub-module configured to control, by a driving integrated circuit IC, switches for all the pixels within each of the third cells to be in a first state and control switches for all the pixels within each of the fourth cells to be in a second state when an odd numbered update is conducted; and a fourth control sub-module configured to control, by the driving IC, switches for all the pixels within each of the third cells to be in the second state and switches for all the pixels within each of the fourth cells to be in the first state when an even numbered update is conducted, wherein each pixel is electrically connected to the driving IC through a corresponding enable line and each pixel is electrically connected to a data line through a switch.

According to a third aspect of the present disclosure, there is provided a device for content displaying, including: a processor; a memory to store instructions executable by the processor; wherein, the processor is configured to perform any inventive method.

The technical solutions provided in the embodiments of the disclosure may provide at least some of the following beneficial effects: by detecting whether there is any change in display content on a display; and control the display to alternately update display data corresponding to a first portion and a second portion of a row of a display unit or alternately update display data corresponding to a third portion and a fourth portion of a column of the display unit in case that no change in the display content is detected, the number of the pixels to be updated by the display each time can be reduced while original refresh frequency is remained, thereby an issue that reduction of refresh frequency of the display will result in screen flicker can be solved and the effects that the screen flicker can be avoided and power consumption of the display can be reduced while original refresh frequency is remained.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram of an implementation environment for a method for content displaying according to an exemplary embodiment.
Fig. 2 is a flow chart of a method for content displaying according to an exemplary embodiment.
Fig. 3A is a flow chart of a method for content displaying according to an exemplary embodiment.
Fig. 3B is a schematic diagram illustrating a first type of updating according to an exemplary embodiment.
Fig. 3C is a schematic diagram illustrating a second type of updating according to an exemplary embodiment.
Fig. 3D is a schematic diagram illustrating a third type of updating according to an exemplary embodiment.
Fig. 3E is a schematic diagram illustrating a fourth type of updating according to an exemplary embodiment.
Fig. 3F is a schematic diagram illustrating a fifth type of updating according to an exemplary embodiment.
Fig. 3G is a schematic diagram illustrating a sixth type of updating according to an exemplary embodiment.
Fig. 3H is a schematic diagram illustrating a seventh type of updating according to an exemplary embodiment.
Fig. 3I is a schematic diagram illustrating an eighth type of updating according to an exemplary embodiment.
Fig. 3J is a schematic diagram illustrating a ninth type of updating according to an exemplary embodiment.
Fig. 3K is a schematic diagram illustrating a tenth type of updating according to an exemplary embodiment.
Fig. 3L is a flow chart of procedure of a method for displaying related to a first type of display according to an exemplary embodiment.
Fig. 3M is a flow chart of procedure of a method for displaying related to a second type of display according to an exemplary embodiment.
Fig. 3N is a flow chart of procedure of a method for displaying related to a third type of display according to an exemplary embodiment.
Fig. 3O is a circuit diagram showing procedure of a method for display related to a certain type of display according to an exemplary embodiment.
Fig. 4 is a block diagram of a device for content displaying according to an exemplary embodiment.
Fig. 5 is a block diagram of a device for content displaying according to another exemplary embodiment.
Fig. 6 is a block diagram of a device for content displaying according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

Methods for content displaying provided by various embodiments of the disclosure may be implemented by an electronic device with a display. The electronic device may be a smart phone, a smart television, a tablet computer, an ebook reader, an MP3 (Moving Picture Experts Group Audio Layer III) player, an MP4 (Moving Picture Experts Group Audio Layer IV) player and a laptop computer (camera, vidicon), etc. The displays may employs a LCD (Liquid Crystal Display), a LED (Light Emitting Diode), or an OLED (Organic Light-Emitting Diode), or any other display using pixels to display.

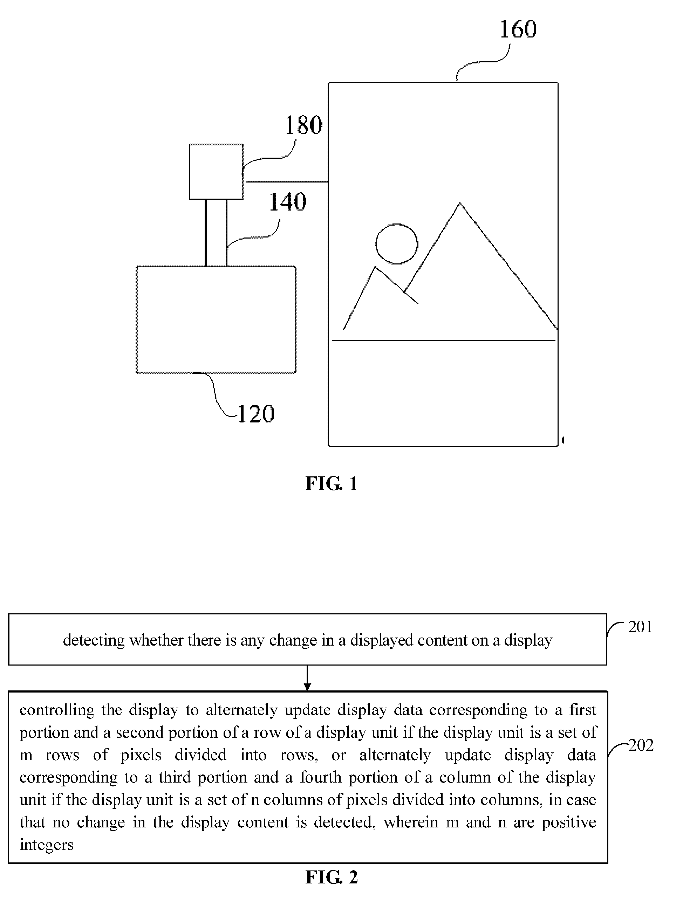

As shown in Fig. 1, a schematic diagram of an implementation environment for the methods for content displaying provided by various exemplary embodiments of the disclosure is illustrated. The implementation environment may be an internal environment of an electronic device with a display. The implementation environment may include a processor 120, a transmission bus 140, a display 160 and a driving IC 180 communicating with the display 160.

The processor 120 may be a CPU (Central Processing Unit) or a GPU (Graphics Processing Unit) configured to generate display data corresponding to display content and to transmit the display data to the driving IC 180 via the transmission bus 140.

The processor 120 and the driving IC 180 may be electrically connected to the transmission bus 140 respectively and transmit the display data via the transmission bus 140.

The driving IC 180 may be used to receive the display data sent by the processor 120 via the transmission bus 140 and to control corresponding pixel units of the display 160 to update the displayed content according to the display data. The driving IC 180 may be electrically connected with the display 160.

In order to simplify the description, a method for content displaying is illustrated below as merely performed by a terminal, but it is not limited thereto.

Fig. 2 is a flow chart of a method for content displaying according to an exemplary embodiment. As shown in Fig.2, the method for content displaying includes following steps.

In step 201, whether there is any change in a display content on (or for) a display (content to be displayed; also referred to as "displayed content" in the figures) is detected.

In step 202, the display is controlled to alternately update display data corresponding to a first portion and a second portion of a row of a display unit if the display unit is a set of m rows of pixels divided into rows, or alternately update display data corresponding to a third portion and a fourth portion of a column of the display unit if the display units is a set of n columns of pixels divided into columns, in case that no change in the display content is detected, wherein m and n are positive integers.

In summary, in the method for content displaying provided by the disclosure, by detecting whether there is any change in a display content on the display and controlling the display to alternately update display data corresponding to a first portion and a second portion of a row of a display unit, or alternately update display data corresponding to a third portion and a fourth portion of a column of a display unit, in case that no change in the displayed content is detected, the number of the pixels to be updated by the display each time can be reduced while original refresh frequency is remained, thereby an issue that reduction of refresh frequency of a display will result in screen flicker can be solved and effects that screen flicker can be avoided and power consumption of a display can be reduced while original refresh frequency is remained.

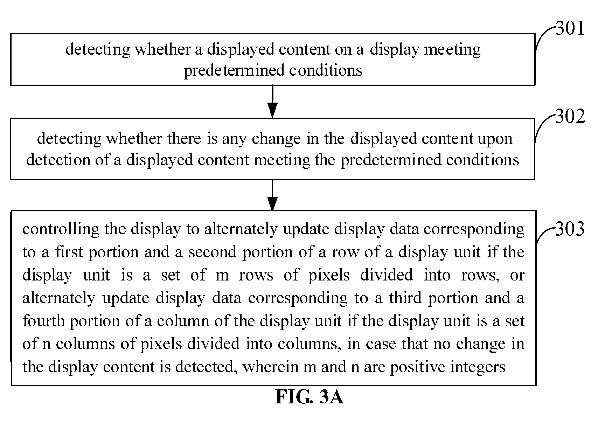

Fig. 3A is a flow chart of a method for content displaying according to an exemplary embodiment. As shown in Fig. 3A, the method for content displaying may includes following steps.

In step 301, whether a display content on a display meets predetermined conditions is detected.

For a display of a terminal displaying contents, a processor may be required to send generated display data to a driving IC communicating with the display at a predetermined frequency. The driving IC controls the display to display a content to be displayed according to the display data. The processor may be a CPU or a GPU, and the predetermined frequency generally may be 60Hz. In certain cases, however, the display content on the display may remain the same within a short period of time. For a display configured with a RAM (Random-Access Memory), the driving IC may read history display data from the RAM when the display content remains the same in order to avoid a waste of resources caused by generation of the same display data by the processor. However, for a display configured without a RAM, the processor is still required to generate the same display data continuously although the display content remains the same, resulting in a waste of computing resources for the processor. Thus, the invention is very advantageous for a display configured without a RAM.

In order to avoid a waste of computing resources for the processor caused by the generation of the same display data, the terminal may detect in real time whether the display content meets the predetermined conditions. Step 302 is performed when a display content is detected to meet the predetermined conditions. The predetermined conditions may include at least one of: the display content belongs to a preset or predetermined application, or requirement for display frames per second (FPS) of the display content is smaller than a preset FPS threshold.

The preset application may be an application such as an ebook, a picture browser and the like. The display content corresponding to such application generally is a static picture and remains the same within a period of time.

Additionally, the preset FPS threshold may be a default refresh frequency of the display. That is, when the display content includes dynamic pictures and the FPS is smaller than the refresh frequency of the display, the display content meets the predetermined conditions. For example, in the case where the display content is a video, when the display FPS of the video is 24 frames/second and the refresh frequency of the display is 60Hz (that is 60 frames/second), the display content meets the predetermined conditions.

In step 302, when the display content is detected to meet the predetermined conditions, whether there is any change in the display content on the display is detected.

Upon the display content is detected to meet the predetermined conditions, the terminal detects whether there is any change in the display content. If there is any change in the display content, complete display data corresponding to the display content is generated. If there is no change in the display content, step 303 is performed.

As an alternative implementation, in the case where the display content belongs to a preset application, upon the terminal receives a Display Content Change signal triggered by a user, the terminal determines there is a change in the display content, wherein the Display Content Change signal may be a signal triggered when the user touches the display.

As another alternative implementation, in the case where requirement for display FPS of the display content is smaller than the preset FPS threshold, the terminal determines the change cycle of the display content according to the requirement for display FPS of the display content and the refresh frequency of the display, and detects whether there is any change in the display content according to the change cycle. For example, if the requirement for display FPS of the display content is 15 frames/second and the refresh frequency of the display is 60Hz (that is, 60 frames/second), then the change cycle of the display content is 4 frames, that is, the display changes the display content every time when 4 frames have been refreshed.

In step 303, the display is controlled to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected, wherein m and n are positive integers.

When no change in the display content is detected, the terminal controls the display to alternately update display data corresponding to a first portion and a second portion of a row of the display unit. Since the display is capable of image maintaining (e.g., the liquid crystal in LCDs), the display data of the second portion will become lighter slightly rather than disappear when the display data corresponding to the first portion is updated. This affects little to the overall display effect of the display content without impact on user experience. Similarly, when the display data corresponding to the third portion or the fourth portion is updated, impact on overall display effect of the display content is also very small.

In a first alternative implementation, when the display unit is a set of m rows of pixels divided into rows, the first portion may include i first cells, and the second portion may include j second cells. The first cells may be alternate with the second cells. i and j may be positive integers. The first cells each may include p successive pixels, and the second cells each may include q successive pixels, wherein p and q are positive integers.

If the display unit is a set of m rows of pixels, the update for the display data of a row of the display unit may be divided into N updates and the display data corresponding to 1/N pixels are alternately updated. For example, when N=2, the update for the display data corresponding to the display unit is divided into two updates, that is, the first update is conducted with respect to display data corresponding to the first portion of the display unit, the second update is conducted with respect to display data corresponding to the second portion of the display unit, and then the first update and the second update are repeatedly in an alternate manner. When N=3, the update for the display data corresponding to the display unit is divided into three updates, that is, the first update is conducted with respect to display data corresponding to the first portion of the display unit, the second update is conducted with respect to display data corresponding to the second portion of the display unit, the third update is conducted with respect to display data corresponding to the third portion of the display unit, and then the first update, the second update and the third update are repeatedly in an alternate manner

It should be noted that the greater the value of N is, the more serious the screen flicker will become, based on the premise that the original refresh frequency remains the same. For example, in the case where the original refresh frequency is 60Hz, when N=2, the refresh frequency for the display data of respective portions are all 30Hz; when N=3, the refresh frequency for the display data of respective portions are all 20Hz. The lower the refresh frequency is, the more serious the screen flicker will become.

In order to avoid screen flicker, in an alternative scenario, the original refresh frequency remains the same and N is set to be a smaller value, e.g., N is set to be 2, the refresh frequency for the display data of respective portions are all 30Hz. In another alternative scenario, the original refresh frequency is increased and N is set to be a larger value, e.g., the original refresh frequency is increased from 60Hz to 90Hz and N is set to be 3, the refresh frequency for the display data of respective portions is 30Hz as well.

When a row of a display unit is divided into a first portion and a second portion, any number of pixels may be selected from the row of the display unit as the first portion and the remaining pixels serve as the second portion. The number of pixels included in the first portion may be the same as or different from that included in the second portion. For example, if a row of a display unit is a set of a row of pixels which includes 1920 pixels, 960 pixels thereof may serve as the first portion and the remaining 960 pixels serve as the second portion.

When selecting the first portion, a plurality of successive pixels may be selected. For example, the first 960 pixels of a row of 1920 pixels may form the first portion and the last 960 pixels of the row of 1920 pixels may form the second portion. Alternatively, the middle 960 pixels of a row of 1920 pixels may form the first portion and the remaining 960 pixels may form the second portion.

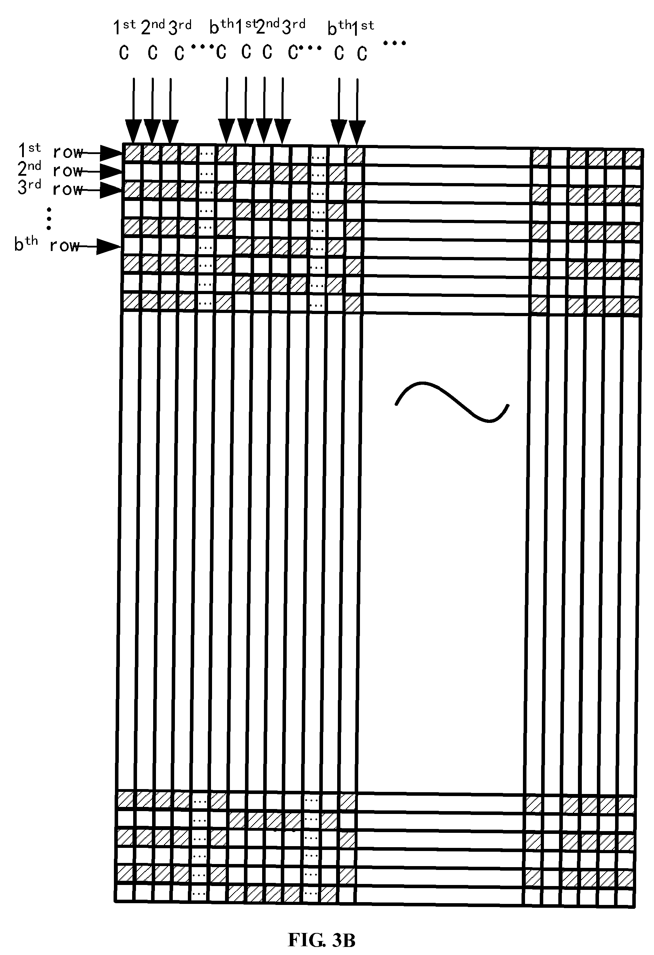

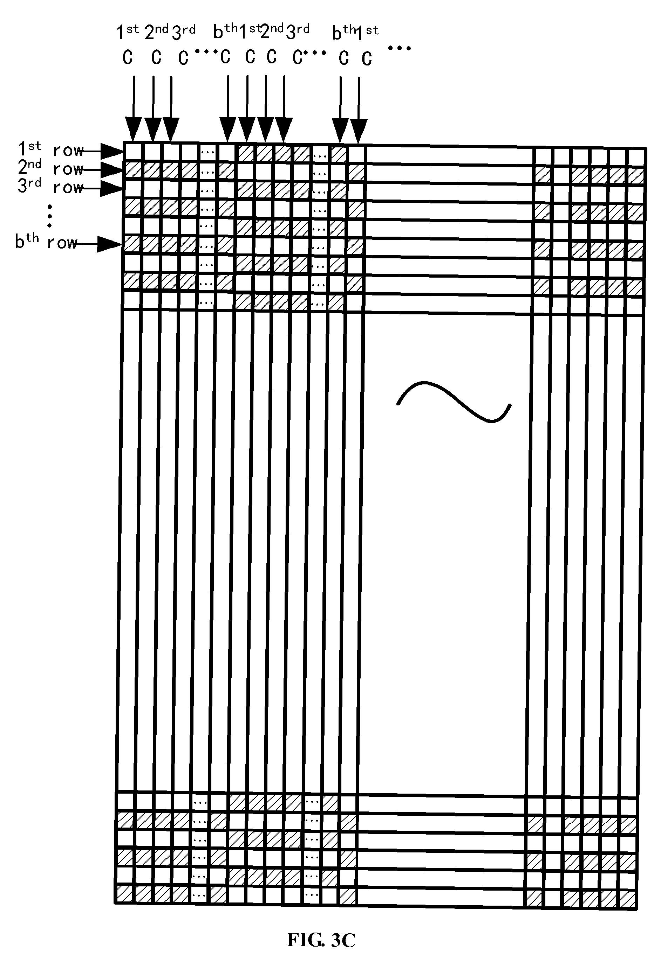

When selecting the first portion, a plurality of non-successive pixels may also be selected. For example, the first portion may include i first cells, and the second portion may include j second cells. The first cells may be alternate with the second cells. The first cells each may include p successive pixels, and the second cells each may include q successive pixels. By referring to Fig. 3B and 3C, p and q are each a group of b pixels, wherein the dashed areas represent the first portion and the blank areas represent the second portion. p and q, however, may also be different and they are not limited to the embodiment.

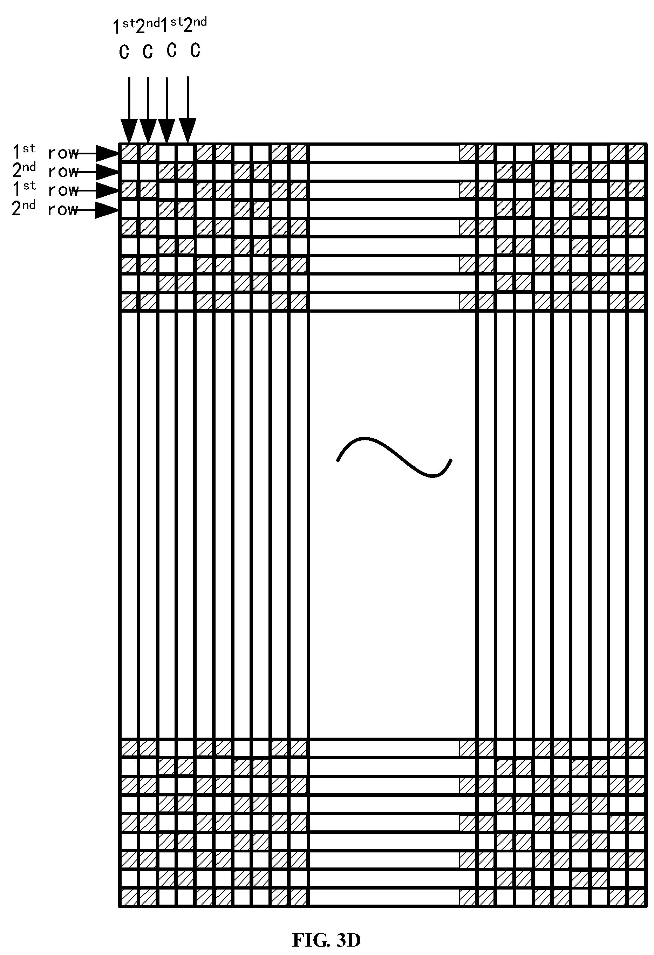

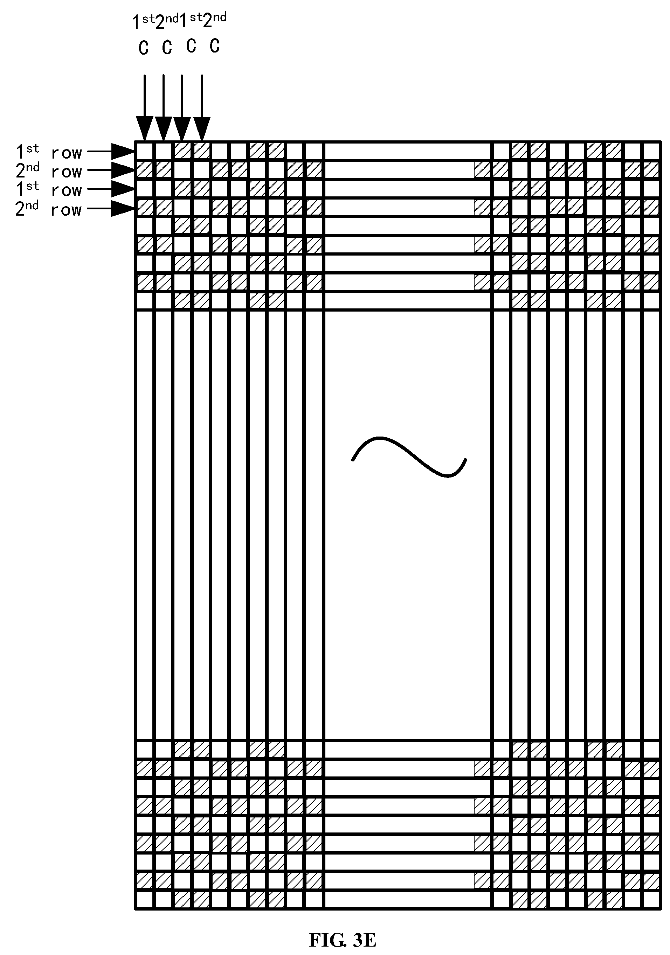

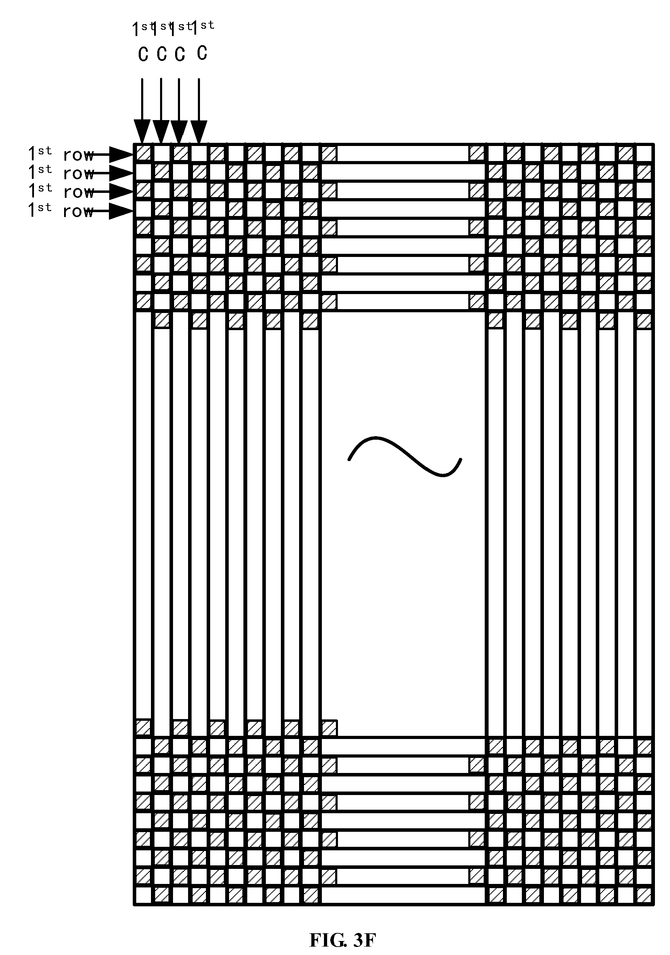

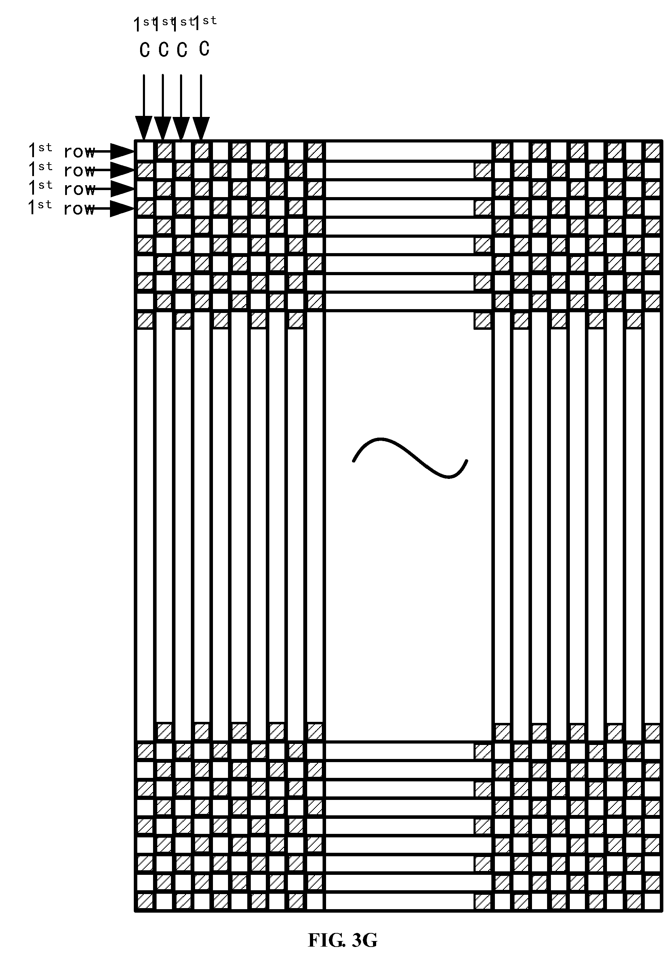

When p and q both equal to 2, Fig. 3D and 3E may be referred to; and when p and q both equal to 1, Fig. 3F and 3G may be referred to. The dashed areas represent the first portion of the display units and the blank areas represent the second portion of the display units.

In this embodiment, in two adjacent rows of a display unit, all the first cells of the first row of the display unit and all the first cells of the second row of the display unit are staggered with each other in the column direction, like a checkered structure; and in the two adjacent rows of display units, all the second cells of the first row of the display unit and all the second cells of the second row of the display unit are staggered with each other in the column direction. In above Fig. 3B-3G, the dashed areas of the two adjacent rows are staggered with each other in the column direction.

It should be supplemented that if the display unit is a set of one row of pixels, p pixels are successive in this row; if the display unit is a set of two or more rows of pixels, if e.g. p=b, a number of first cells each comprising p successive pixels lies within a b*b pixel array in which b pixels of each row are successive and b pixels of each column (simply referred to "C" in figures) are non-successive, that is, 1 to b pixels of the first row are successive p pixels, 1 to b pixels of the third row, 1 to b pixels of the fifth row and so on, by reference to Fig. 3B and 3C.

When no change in the display content is detected, the terminal may control the display to merely update the display data corresponding to the first cells when an odd numbered update is conducted and to merely update the display data corresponding to the second cells when an even numbered update is conducted. In other words, the dashed areas in Fig 3B, 3D and 3F are updated when an odd numbered update is conducted, and the dashes areas in Fig 3C, 3E and 3G are updated when an even numbered update is conducted.

In a second alternative implementation, when the display unit is a set of n columns of pixels divided into columns, the third portion of the column of the display unit may include k first cells, and the fourth portion of the column of the display unit may include l third cells. The third cells may be alternate with the fourth cells. k and l may be positive integers. The third cells each may include r successive pixels, and the third cells each may include s successive pixels, wherein r and s may be positive integers.

In the implementation, in two adjacent columns of the display unit, all the third cells of a first column of the display unit and all the third cells of a second column of the display unit are staggered with each other in the row direction; and in the two adjacent columns of the display unit, all the fourth cells of the first column of display unit and all the fourth cells of the second column of the display unit are staggered with each other in the row direction.

The second implementation is similar with the first implementation, so those detailed descriptions for the first implementation may be referred for the second implementation.

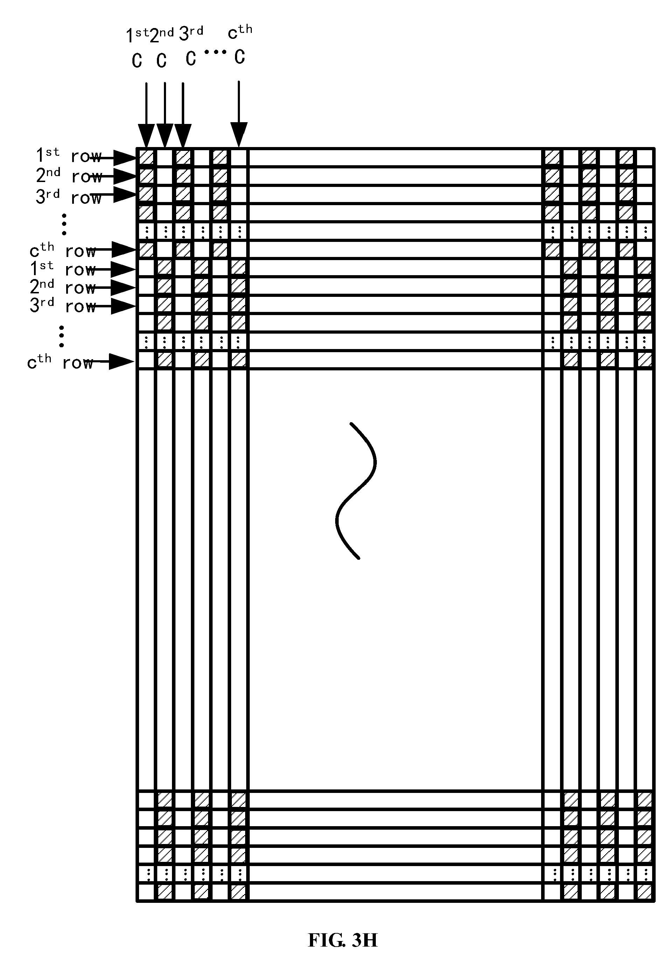

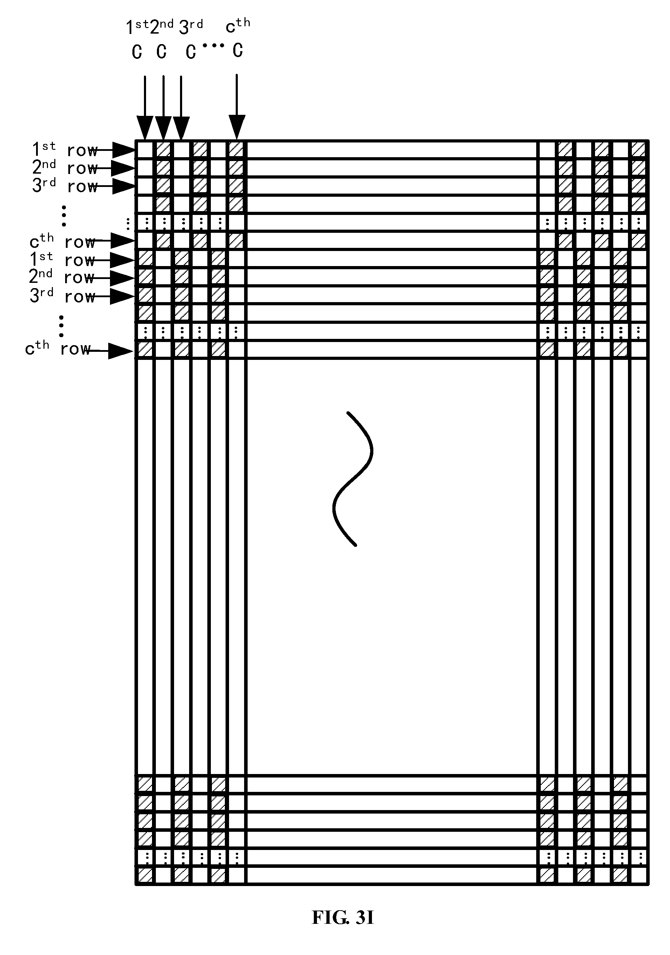

In addition, by referring to Fig. 3H and 3I, r and s are each a group of c pixels, and the dashed areas represent the first portion of the display units and the block areas represent the second portion of the display units. Of course, r and s may be different and are not limited to the embodiment.

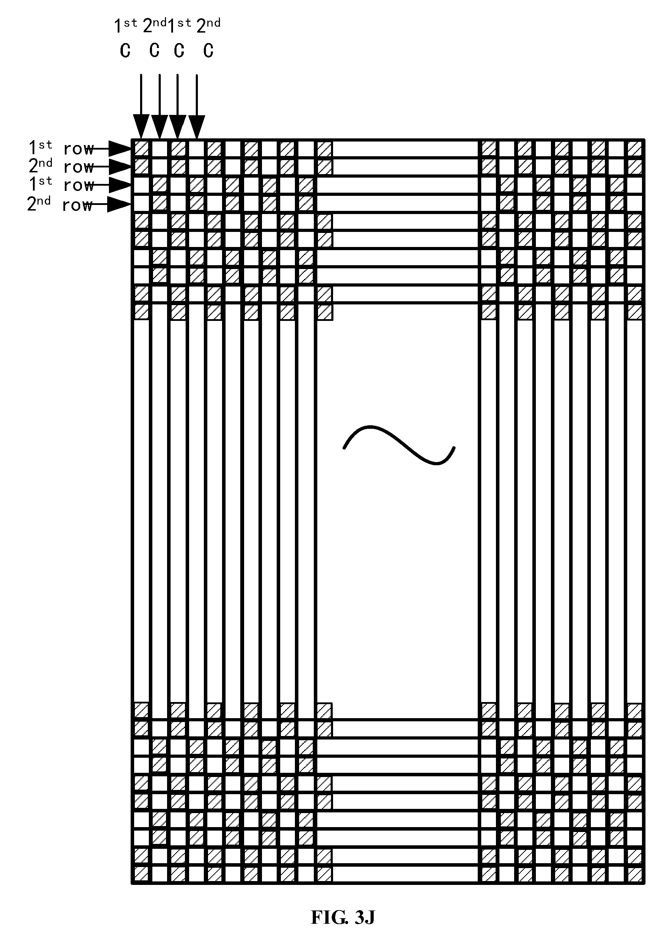

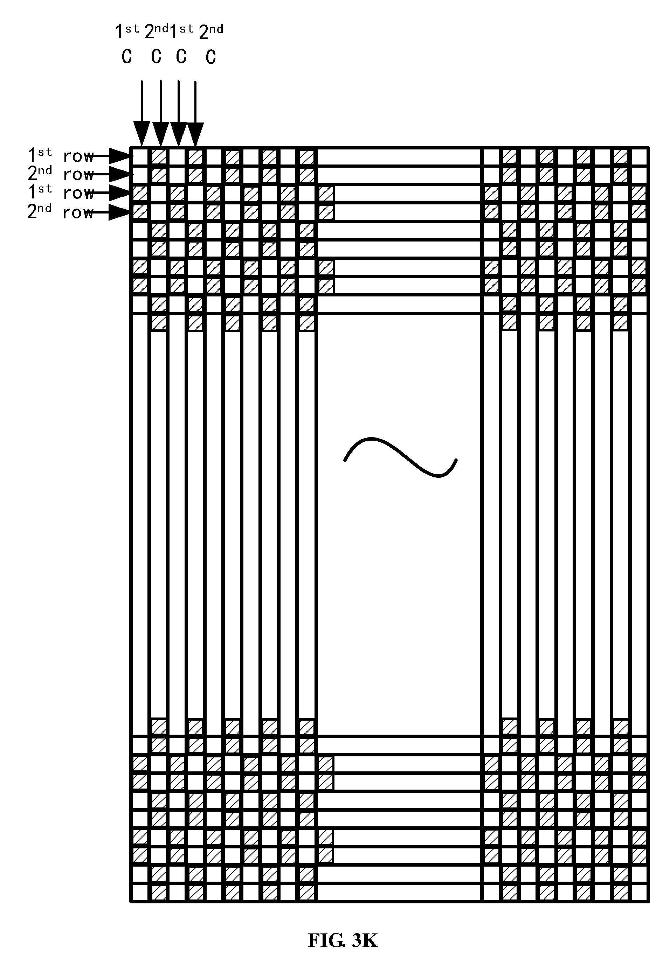

When r and s are all equal to 2, Fig. 3J and 3K may be referred to, and when r and s both equal to 1, Fig. 3F and 3G may be referred to, which is similarly with the case in the first implementation where p and q both equal to 1. The dashed areas represent the first portion of the display units and the blank areas represent the second portion of the display units.

In case that no change in the display content is detected, the terminal may control the display to merely update display data corresponding to the third cells when an odd numbered update is conducted, and to merely update display data corresponding to the fourth cells when an even numbered update is conducted. That is, the dashed areas in Fig.3H, Fig.3J and Fig.3F are updated in an odd numbered update, and the dashed areas in Fig.3I, Fig.3K and Fig.3J are updated in an even numbered update.

It is obvious that only a part of display data is required to be updated without updating complete display data each time the display conducts refreshing when the display content remains the same with the above method to control the display to display content. For example, when a first portion and a second portion of the display units are alternately updated, or a third portion and a fourth portion of the display units, the amount of display data to be updated is half of the original amount at each refresh, thereby significantly reducing the power consumption of the display.

There are three following alternative implementations regarding the terminal controlling the display to update the display content.

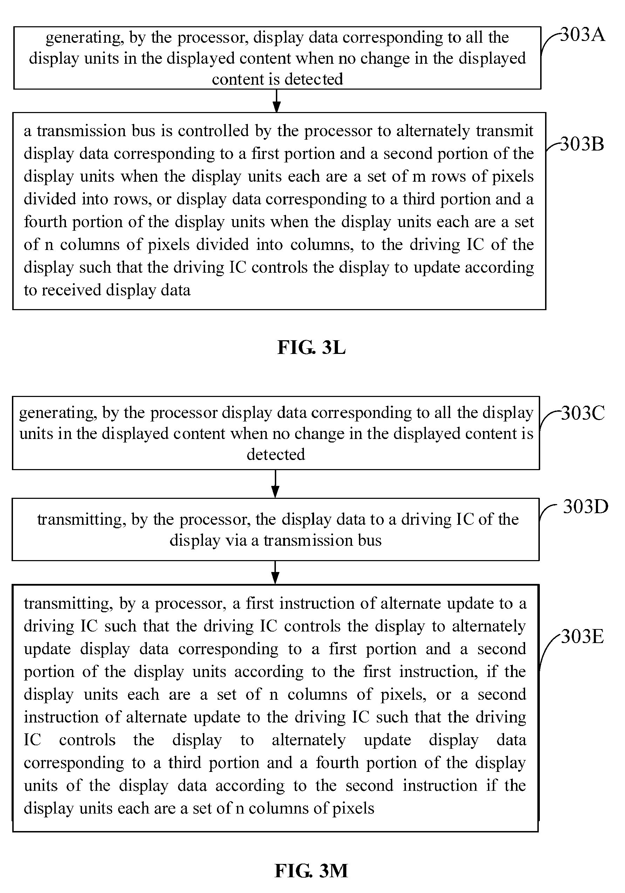

In the first alternative implementation, as shown in Fig. 3L, the above step 303 may include following steps.

In step 303A, when no change in display content is detected, the display data corresponding to all the display units in the display content is generated by the processor.

Upon the processor of the terminal detects no change in the display content, the display data corresponding to all the display units in the display content is generated by the processor according to the resolution of the display. The processor may be a CPU or a GPU. For example, if the resolution of the display is 1080*1920, the data amount of the display data corresponding to the display content generated by the processor is 1080*1920=2073600 pixels.

In step 303B, a transmission bus is controlled by the processor to alternately transmit display data corresponding to a first portion and a second portion of the display units when the display units each are a set of m rows of pixels divided into rows, or display data corresponding to a third portion and a fourth portion of the display units when the display units each are a set of n columns of pixels divided into columns, to the driving IC of the display such that the driving IC controls the display to update according to received display data.

In order to decrease the data amount of the display data to be updated by the display when the display content remains the same, in the case that the processor detects no change in the display content, the transmission bus is controlled to alternately transmit display data corresponding to a first portion and a second portion of the display units to the driving IC of the display if the display units each are a set of m rows of pixels, or the transmission bus is controlled to alternately transmit display data corresponding to a third portion and a fourth portion of the display units to the driving IC of the display if the display units each are a set of n columns of pixels.

After the driving IC receives the display data via the transmission bus, corresponding pixels in the display are controlled to be updated according to the display data. The transmission bus alternately transmits the display data corresponding to the first portion and the second portion of the display units, such that only display data corresponding to the first portion of the display units or the second portion of the display units is updated when the display updates the display content each time. Alternatively, the transmission bus alternately transmits the display data corresponding to the third portion and the fourth portion of the display units, such that only display data corresponding to the third portion or the fourth portion of the display units is updated when the display updates the display content each time. Compared with traditional methods for updating, the amount of data to be update is significantly reduced and the look and feel of the user cannot be affected due to alternate transmission of display data corresponding to a part of the display units. Additionally, since the amount of the data transmitted in the transmission bus is significantly reduced, the electromagnetic interference caused by the data transmission is weakened accordingly, therefore normal operation of other components in the terminal is guaranteed.

It should be noted that upon any change in the display content is detected, the processor sends the complete display data to the driving IC via the transmission bus. The driving IC controls the display to update the display data corresponding to all the display units in the display content.

In this embodiment, in case that there is no change in the display content, the transmission bus is controlled by the processor to alternately transmit the display data corresponding to the first portion and the second portion of the display units to the driving IC of the display if the display units each are a set of m rows of pixels, or the transmission bus is controlled by the processor to alternately transmit display data corresponding to the third portion and the fourth portion of the display units to the driving IC of the display if the display units each are a set of n columns of pixels such that the driving IC controls the display to update according to received display data. Thus the power consumption of the transmission bus is reduced and the electromagnetic interference caused by the transmission of the display data in the transmission bus also can be reduced.

In the second alternative implementation, as shown in Fig. 3M, the above step 303 may include following steps.

In step 303C, when no change in the display content is detected, the display data corresponding to all the display units in the display content is generated by the processor.

The implementation of this step is similar to that of above step 303A and redundant description is not provided here.

In step 303D, the display data is transmitted by the processor to the driving IC of the display via the transmission bus.

It is different from the above step 303B that complete display data is transmitted by the processor to the driving IC via the transmission bus.

In step 303E, if the display units each are a set of m rows of pixels, a first instruction of alternate update is sent by the processor to the driving IC such that the driving IC controls the display to alternately update display data corresponding to a first portion and a second portion of the display units of the display data according to the first instruction of alternate update, or, if the display units each are a set of n columns of pixels, a second instruction of alternate update is sent by the processor to the driving IC such that the driving IC controls the display to alternately update display data corresponding to a third portion and a fourth portion of the display units of the display data according to the second instruction of alternate update.

While transmitting complete display data to the transmission bus, the processor sends the instruction of alternate update to the driving IC to indicate the driving IC to control the display to alternately update display data corresponding to the first portion and the second portion of the display units of the display data in if the display units each are a set of m rows of pixels, or indicate the driving IC to control the display to alternately update display data corresponding to the third portion and the fourth portion of the display units of the display data if the display units each are a set of n columns of pixels, thus the power consumption when the display content of the display remains the same is reduced by the display alternately updating the display data.

It should be noted that when there is any change in the display content, the processor merely transmits the complete display data to the driving IC via the transmission bus without sending an instruction of alternate update, and accordingly, the driving IC controls the display to update the display data of all the display units.

In the embodiment, in case that there is no change in the display content, while transmitting the display data corresponding to all the display units to the driving IC, the processor transmits an instruction of alternate update to the driving IC to indicate the driving IC to control the display to alternately update display data corresponding to the first portion and the second portion of the display units of the display data, or indicate the driving IC to control the display to alternately update display data corresponding to the third portion and the fourth portion of the display units of the display data, in order to reduce the amount of the display data in the display to be updated when the display content remains the same and to reduce the power consumption of the display.

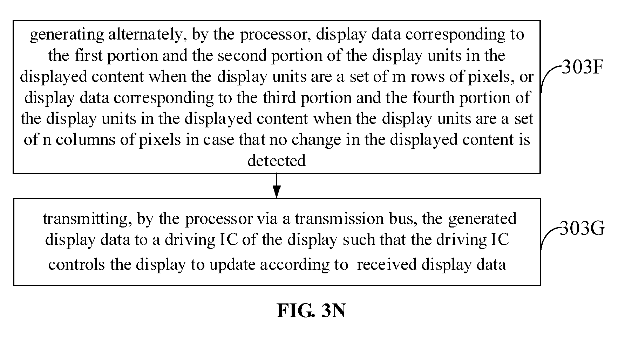

In the third alternative implementation, as shown in Fig. 3N, the above step 303 may include following steps.

In step 303F, in case that no change in the display content is detected, display data corresponding to a first portion and a second portion of the display units within the display content is alternately generated by the processor if the display units each are a set of m rows of pixels; or, display data corresponding to a third portion and a fourth portion of the display units within the display content is alternately generated by the processor if the display units each are a set of n columns of pixels.

Unlike the above step 303A and step 303C, after no change in the display content is detected, the processor alternately generates display data corresponding to a first portion and a second portion of the display units or alternately generates display data corresponding to a third portion and a fourth portion of the display units during display data generation stage. Compared with generating complete display data, the processing resources consumed by the processor when generating display data is significantly reduced due to merely generating a part of display data, and thus the power consumption of the processor is reduced accordingly.

In step 303G, the generated display data is transmitted by the processor to the driving IC of the display such that the driving IC controls the display to update according to received display data, wherein the display data is transmitted via the transmission bus.

The processor alternately generates display data corresponding to the first portion and the second portion of the display units or alternately generates display data corresponding to the third portion and the fourth portion of the display units and transmits the generated display data to the driving IC via the transmission bus, and the driving IC then controls the display to update accordingly based on the display data. Thus, not only the amount of data to be updated when the display content remains the same is reduced, but also the amount of data to be transmitted in the transmission bus is reduced, such that the electromagnetic interference caused by the transmission of the display data in the transmission bus is reduced.

In this embodiment, in case that there is no change in the display content, the processor alternately generates display data corresponding to a first portion and a second portion of the display units in the display content or alternately generates display data corresponding to a third portion and a fourth portion of the display units in the display content and transmits the generated display data to the driving IC of the display via the transmission bus, and the driving IC then controls the display to update alternately based on the display data. Thus, not only the amount of the display data to be generated by the processor and then the power consumption of the display can be reduced, but also the power consumption of the transmission bus and then the electromagnetic interference caused by the transmission of the display data in the transmission bus can be reduced.

After the driving IC obtains the display data through the above three methods, it may control the display to update the display data. During implementations, step 303 may further includes: if the display units each are a set of m rows of pixels divided into rows, switches for all the pixels within each of the first cells are controlled by the driving IC to be in a first state and switches for all the pixels within each of the second cells are controlled by the driving IC to be in a second state when an odd numbered update is conducted; and the switches for all the pixels within each of the first cells are controlled by the driving IC to be in the second state and the switches for all the pixels within each of the second cells are controlled by the driving IC to be in the first state when an even numbered update is conducted; if the display units each are a set of n columns of pixels divided into columns, switches for all the pixels within each of the third cells are controlled by the driving IC to be in a first state and switches for all the pixels within each of the fourth cells are controlled by the driving IC to be in a second state when an odd numbered update is conducted, and the switches for all the pixels within each of the third cells are controlled by the driving IC to be in the second state and the switches for all the pixels within each of the fourth cells are controlled by the driving IC to be in the first state when an even numbered update is conducted.

In circuit implementation, each pixel may be electrically connected to the driving IC through a corresponding enable line, and each pixel may be electrically connected to a data line through a switch. The driving IC may control state of the switches corresponding to the pixels through respective enable lines. The first state may be on-state and the second state may be off-state. Alternatively, the first state may be off-state and the second state may be on-state.

For example, when the driving IC controls a switch for a pixel through an enable line to be in on-state, the display data is transmitted in a data line for update of the display data of the pixel; when the driving IC controls the switch of the pixel through the enable line to be in off-state, the display data of the pixel remains the same.

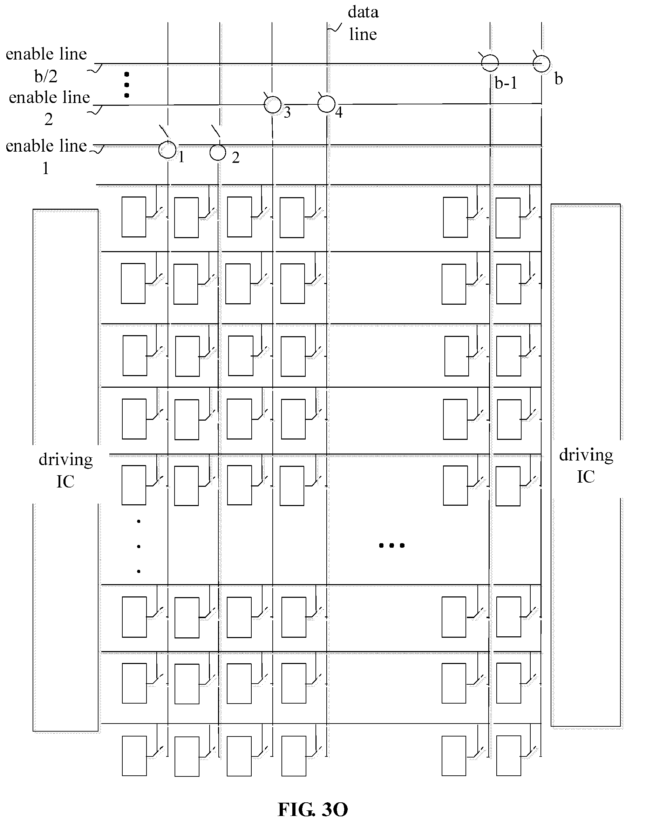

In this embodiment, either one data line or a plurality of data lines may be set for each pixel, and this is not limited to the embodiment. By referring to Fig. 3O, taking one data line for a set of one column of pixels for example and assuming that the first cells and the second cells each includes 2 successive pixels, when a set of a first row of pixels are scanned, that is, when the display data corresponding to the first row of display units is updated, switches 1 and 2 are controlled to be on by enable line 1, switches 3 and 4 are controlled to be off by enable line 2,...., and so on, switches b-1 and b are controlled to be on by enable line b/2; when a set of a second row of pixels are scanned, switches 1 and 2 are controlled to be off by enable line 1, switches 3 and 4 are controlled to be on by enable line 2,...., and so on, and switches b-1 and b are controlled to be off by enable line b/2.

From the above, in the methods for displaying provided by the embodiment, by detecting whether there is any change in a display content and controlling the display to alternately update display data corresponding to a first portion and a second portion of the display units within the display content or alternately update display data corresponding to a third portion and a fourth portion of the display units within the display content in case that no change in the display content is detected, the number of the pixels to be updated by the display each time can be reduced while original refresh frequency is remained, thereby an issue that reduction of refresh frequency of the display will result in screen flicker can be solved and the effects that the screen flicker can be avoided and power consumption of the display can be reduced while original refresh frequency is remained.

Additionally, power consumption of a transmission bus can be reduced by using the three implementations of a terminal controlling a display to update contents, attaining the effect that electromagnetic interference caused by transmission of display data in the transmission bus can be reduced.

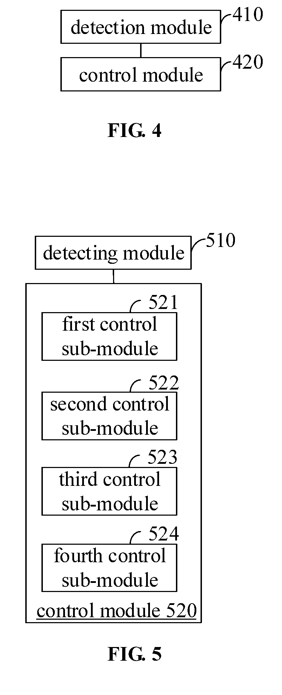

FIG. 4 is a block diagram of a device for content displaying according to an exemplary embodiment. As shown in Fig. 4, the device for content displaying may include: a detection module 410 and a control module 420.

The detection module 410 may be configured to detect whether there is any change in a display content on a display.

The control module 420 may be configured to control the display to alternately update display data corresponding to a first portion and a second portion of a row of display units if the display units each are a set of m rows of pixels divided into rows and alternately update display data corresponding to a third portion and a fourth portion of a column of display units if the display units each are a set of n columns of display units divided into columns in case that no change in the display content is detected by the detection module 410, wherein m and n may be positive integers.

From the above, in the device for content displaying provided by the disclosure, by detecting whether there is any change in a display content on the display and controlling the display to alternately update display data corresponding to a first portion and a second portion of the display units within the display content or alternately update display data corresponding to a third portion and a fourth portion of the display units within the display content in case that no change in the display content is detected, the number of the pixels to be updated by the display each time can be reduced while original refresh frequency is remained, thereby the issue that reduction of refresh frequency of a display will result in screen flicker can be solved and the effects that screen flicker can be avoided and power consumption of a display can be reduced while original refresh frequency is remained.

FIG. 5 is a block diagram of a device for content displaying according to an exemplary embodiment. As shown in Fig. 5, the device for content displaying may include: a detection module 510 and a control module 520.

The detection module 510 may be configured to detect whether there is any change in a display content on a display.

The control module 520 may be configured to control the display to alternately update display data corresponding to a first portion and a second portion of a row of display units if the display units each are a set of m rows of pixels divided into rows and alternately update display data corresponding to a third portion and a fourth portion of a column of display units if the display units each are a set of n columns of pixels divided into columns in case that no change in the display content is detected by the detection module 410.

Alternatively, if the display units each are a set of m rows of pixels divided into rows, the first portion may include i first cells, and the second portion may include j second cells. The first cells may be alternate with the second cells. i and j may be positive integers.

The first cells each may include p successive pixels, and the second cells each may include q successive pixels, wherein p and q are positive integers.

Additionally, in two adjacent rows of a display unit, all the first cells of a first row of the display unit and all the first cells of a second row of the display unit are staggered with each other in the column direction; and in the two adjacent rows of the display unit, all the second cells of the first row of the display unit and all the second cells of the second row of the display unit are staggered with each other in the column direction.

Additionally, each pixel is electrically connected to a driving IC through a corresponding enable line and each pixel is electrically connected to a data line through a switch, and the control module 520 may include: a first control sub-module 521 and a second control sub-module 522.

The first control sub-module 521 may be configured to control, by the driving IC, switches for all the pixels within each of the first cells to be in a first state and switches for all the pixels within each of the second cells to be in a second state when an odd numbered update is conducted.

The second control sub-module 522 may be configured to control, by the driving IC, the switches for all the pixels within each of the first cells to be in the second state and the switches for all the pixels within each of the second cells to be in the first state when an even numbered update is conducted.

Additionally, if the display units each are a set of n columns of pixels divided into columns, the third portion may include k third cells, and the fourth portion may include l fourth cells, and the third cells are alternate with the fourth cells, wherein k and l are positive integers. The third cells each may include r successive pixels, and the fourth cells each may include s successive pixels, wherein r and s are positive integers.

Advantageously, in two adjacent columns of the display unit, all the third cells of a first column of the display unit and all the third cells of a second column of the display unit are staggered with each other in the row direction; and in the two adjacent columns of the display unit, all the fourth cells of the first column of the display unit and all the fourth cells of the second column of the display unit are staggered with each other in the row direction.

Advantageously, each pixel is electrically connected to a driving integrated circuit IC through a corresponding enable line and each pixel is electrically connected to a data line through a switch. The control module 520 may further include a third control sub-module 523 and a fourth control sub-module 524.

The third control module 523 is configured to control, by the driving IC, switches for all the pixels within each of the third cells to be in a first state and control switches for all the pixels within each of the fourth cells to be in a second state when an odd numbered update is conducted.

The fourth control module 524 is configured to control, by the driving IC, switches for all the pixels within each of the third cells to be in the second state and switches for all the pixels within each of the fourth cells to be in the first state when an even numbered update is conducted.

From the above, in the device for content displaying provided by the embodiment, by detecting whether there is any change in a display content and controlling the display to alternately update display data corresponding to a first portion and a second portion of the display units within the display content or alternately update display data corresponding to a third portion and a fourth portion of the display units within the display content in the case that no change in the display content is detected, the number of the pixels to be updated by the display each time can be reduced while original refresh frequency is remained, thereby an issue that reduction of refresh frequency of the display will result in screen flicker can be solved and the effects that the screen flicker can be avoided and power consumption of the display can be reduced while original refresh frequency is remained.

With respect to the devices in the above embodiments, the specific manners for performing operations for individual modules therein have been described in detail in the embodiments regarding related methods, which will not be elaborated herein.

An exemplary embodiment of the present disclosure provides a device for content displaying which is capable of implementing the methods for content displaying provided by the disclosure, the device may include: a processor, a memory to store instructions executable by the processor, wherein the processor may be configured to: detect whether there is any change in a display content on a display; and control the display to alternately update display data corresponding to a first portion and a second portion of a row of a display unit if the display unit is a set of m rows of display units divided into rows, or alternately update display data corresponding to a third portion and a fourth portion of a column of the display unit if the display unit is a set of n columns of display units divided into columns, in case that no change in the display content is detected, wherein m and n are positive integers.

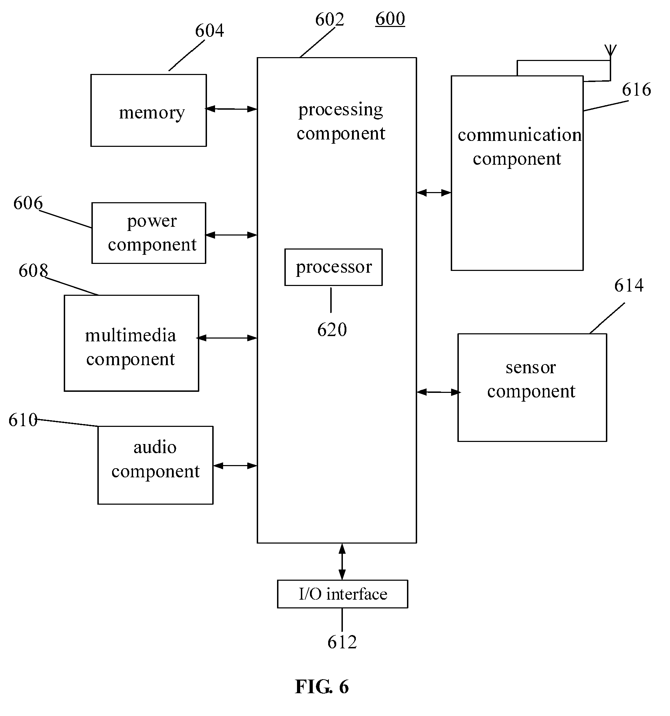

Fig. 6 is a block diagram of a device for content displaying illustrated according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 618 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide state assessments of various aspects of the device 600. For instance, the sensor component 614 may detect an open/closed state of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 604 having stored therein instructions, when executed by the processor 618 in the device 600, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for content displaying, **characterized in** comprising:
detecting (201, 302) whether there is any change in a display content on a display; and
controlling (202, 303) the display to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected, wherein m and n are positive integers.

2. The method of claim 1, wherein if the display unit is a set of m rows of pixels divided into rows, the first portion comprises i first cells, the second portion comprises j second cells, and the first cells are alternate with the second cells, wherein i and j are positive integers; and
wherein each first cell comprises p successive pixels, and each second cell comprises q successive pixels, wherein p and q are positive integers.

3. The method of claim 2, wherein in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display unit are staggered with each other in the column direction.

4. The method of claim 2 or 3, wherein each pixel is electrically connected to a driving integrated circuit IC through a corresponding enable line and each pixel is electrically connected to a data line through a switch, and wherein said controlling the display to alternately update the display data corresponding to a first portion and a second portion of a row of the display unit comprises:
controlling, by the driving IC, switches for all the pixels within each of the first cells to be in a first state and switches for all the pixels within each of the second cells to be in a second state when an odd numbered update is conducted; and
controlling, by the driving IC, the switches for all the pixels within each of the first cells to be in the second state and the switches for all the pixels within each of the second cells to be in the first state when an even numbered update is conducted.

5. The method of claim 1, wherein if the display unit is a set of n columns of pixels divided into columns, the third portion comprises k third cells, and the fourth portion comprises l fourth cells, and the third cells are alternate with the fourth cells, wherein k and l are positive integers, and
wherein each third cell comprises r successive pixels, and each fourth cell comprises s successive pixels, wherein r and s are positive integers.

6. The method of claim 5, wherein in two adjacent columns of the display unit, all the third cells of a first column of the display unit and all the third cells of a second column of the display unit are staggered with each other in the row direction; and in the two adjacent columns of the display unit, all the fourth cells of the first column of the display unit and all the fourth cells of the second column of the display unit are staggered with each other in the row direction.

7. The method of claim 5 or 6, wherein each pixel is electrically connected to a driving integrated circuit IC through a corresponding enable line and each pixel is electrically connected to a data line through a switch, and wherein said controlling the display to alternately update display data corresponding to a third portion and a fourth portion of a column of the display unit comprises:
controlling, by the driving IC, switches for all the pixels within each of the third cells to be in a first state and switches for all the pixels within each of the fourth cells to be in a second state when an odd numbered update is conducted; and
controlling, by the driving IC, the switches for all the pixels within each of the third cells to be in the second state and controlling the switches for all the pixels within each of the fourth cells to be in the first state when an even numbered update is conducted.

8. A device for content displaying, comprising:
a detection module (410, 510) configured to detect whether there is any change in a display content on a display; and
a control module (420, 520) configured to control the display to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected by the detection module, wherein m and n are positive integers.

9. The device of claim 8, wherein if the display unit is a set of m rows of pixels divided into rows, the first portion comprises i first cells, the second portion comprises j second cells, and the first cells are alternate with the second cells, wherein i and j are positive integers, and
wherein each first cell comprises p successive pixels, and each second cell comprises q successive pixels, wherein p and q are positive integers.

10. The device of claim 9, wherein in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display units are staggered with each other in the column direction.

11. The device of claim 9 or 10, wherein the control module comprises:
a first control sub-module (521) configured to control, by a driving integrated circuit IC, switches for all the pixels within each of the first cells to be in a first state and switches for all the pixels within each of the second cells to be in a second state when an odd numbered update is conducted;
a second control sub-module (522) configured to control, by the driving IC, the switches for all the pixels within each of the first cells to be in the second state and the switches for all the pixels within each of the second cells to be in the first state when an even numbered update is conducted,
wherein each pixel is electrically connected to the driving IC through a corresponding enable line and each pixel is electrically connected to a data line through a switch.

12. The device of claim 8, wherein if the display unit is a set of n columns of pixels divided into columns, the third portion comprises k third cells, the fourth portion comprises l fourth cells, and the third cells are alternate with the fourth cells, wherein k and l are positive integers, and
wherein each third cell comprises r successive pixels, and each fourth cell comprises s successive pixels, wherein r and s are positive integers.

13. The device of claim 12, wherein in two adjacent columns of the display unit, all the third cells of a first column of the display unit and all the third cells of a second column of the display unit are staggered with each other in the row direction; and in the two adjacent columns of the display units, all the fourth cells of the first column of the display unit and all the fourth cells of the second column of the display unit are staggered with each other in the row direction.

14. The device of claim 12 or 13, wherein the control module comprises:
a third control sub-module (523) configured to control, by a driving integrated circuit IC, switches for all the pixels within each of the third cells to be in a first state and switches for all the pixels within each of the fourth cells to be in a second state when an odd numbered update is conducted; and
a fourth control sub-module (524) configured to control, by the driving IC, switches for all the pixels within each of the third cells to be in the second state and switches for all the pixels within each of the fourth cells to be in the first state when an even numbered update is conducted,
wherein each pixel is electrically connected to the driving IC through a corresponding enable line and each pixel is electrically connected to a data line through a switch.

15. A device for content displaying, comprising:
a processor (620);
a memory (604) to store instructions executable by the processor;
wherein, the processor is configured to perform a method of any one of claims 1- 7.

## Amended claims

### Amended claims in accordance with Rule 137(2) EPC.

1. A method for content displaying, comprising:
detecting (201, 302) whether there is any change in a display content on a display (160); and
controlling (202, 303) the display (160) to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected, wherein m and n are positive integers,
**characterized in that**:
if the display unit is a set of m rows of pixels divided into rows, the first portion comprises i first cells, and the second portion comprises j second cells, and the first cells are alternate with the second cells, wherein i and j are positive integers, and wherein each first cell comprises p successive pixels, and each second cell comprises q successive pixels, wherein p and q are positive integers and are greater than 1; and
if the display unit is a set of n columns of pixels divided into columns, the third portion comprises k third cells, and the fourth portion comprises l fourth cells, and the third cells are alternate with the fourth cells, wherein k and l are positive integers, and wherein each third cell comprises r successive pixels, and each fourth cell comprises s successive pixels, wherein r and s are positive integers and are greater than 1.

2. The method of claim 1, wherein in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display unit are staggered with each other in the column direction.

3. The method of claim 1 or 2, wherein each pixel is electrically connected to a driving integrated circuit IC (180) through a corresponding enable line and each pixel is electrically connected to a data line through a switch, and wherein said controlling the display (160) to alternately update the display data corresponding to a first portion and a second portion of a row of the display unit comprises:
controlling, by the driving IC (180), switches for all the pixels within each of the first cells to be in a first state and switches for all the pixels within each of the second cells to be in a second state when an odd numbered update is conducted; and
controlling, by the driving IC (180), the switches for all the pixels within each of the first cells to be in the second state and the switches for all the pixels within each of the second cells to be in the first state when an even numbered update is conducted.

4. The method of claim 1, wherein in two adjacent columns of the display unit, all the third cells of a first column of the display unit and all the third cells of a second column of the display unit are staggered with each other in the row direction; and in the two adjacent columns of the display unit, all the fourth cells of the first column of the display unit and all the fourth cells of the second column of the display unit are staggered with each other in the row direction.

5. The method of claim 1 or 4, wherein each pixel is electrically connected to a driving integrated circuit IC (180) through a corresponding enable line and each pixel is electrically connected to a data line through a switch, and wherein said controlling the display to alternately update display data corresponding to a third portion and a fourth portion of a column of the display unit comprises:
controlling, by the driving IC (180), switches for all the pixels within each of the third cells to be in a first state and switches for all the pixels within each of the fourth cells to be in a second state when an odd numbered update is conducted; and
controlling, by the driving IC (180), the switches for all the pixels within each of the third cells to be in the second state and controlling the switches for all the pixels within each of the fourth cells to be in the first state when an even numbered update is conducted.

6. A device for content displaying, comprising:
a detection module (410, 510) configured to detect whether there is any change in a display content on a display (160); and
a control module (420, 520) configured to control the display (160) to alternately update display data corresponding to a first portion and a second portion of a row of a display unit if the display unit is a set of m rows of pixels divided into rows, or alternately update display data corresponding to a third portion and a fourth portion of a column of the display unit if the display unit is a set of n columns of pixels divided into columns, in case that no change in the display content is detected by the detection module, wherein m and n are positive integers,
**characterized in that**:
if the display unit is a set of m rows of pixels divided into rows, the first portion comprises i first cells, and the second portion comprises j second cells, and the first cells are alternate with the second cells, wherein i and j are positive integers, and wherein each first cell comprises p successive pixels, and each second cell comprises q successive pixels, wherein p and q are positive integers and are greater than 1; and
if the display unit is a set of n columns of pixels divided into columns, the third portion comprises k third cells, and the fourth portion comprises l fourth cells, and the third cells are alternate with the fourth cells, wherein k and l are positive integers, and wherein each third cell comprises r successive pixels, and each fourth cell comprises s successive pixels, wherein r and s are positive integers and are greater than 1.

7. The device of claim 6, wherein in two adjacent rows of the display unit, all the first cells of a first row of the display unit and all the first cells of a second row of the display unit are staggered with each other in the column direction; and in the two adjacent rows of the display unit, all the second cells of the first row of the display unit and all the second cells of the second row of the display units are staggered with each other in the column direction.

8. The device of claim 6 or 7, wherein the control module comprises:
a first control sub-module (521) configured to control, by a driving integrated circuit IC (180), switches for all the pixels within each of the first cells to be in a first state and switches for all the pixels within each of the second cells to be in a second state when an odd numbered update is conducted;
a second control sub-module (522) configured to control, by the driving IC (180), the switches for all the pixels within each of the first cells to be in the second state and the switches for all the pixels within each of the second cells to be in the first state when an even numbered update is conducted,
wherein each pixel is electrically connected to the driving IC (180) through a corresponding enable line and each pixel is electrically connected to a data line through a switch.

9. The device of claim 6, wherein in two adjacent columns of the display unit, all the third cells of a first column of the display unit and all the third cells of a second column of the display unit are staggered with each other in the row direction; and in the two adjacent columns of the display units, all the fourth cells of the first column of the display unit and all the fourth cells of the second column of the display unit are staggered with each other in the row direction.

10. The device of claim 6 or 9, wherein the control module comprises:
a third control sub-module (523) configured to control, by a driving integrated circuit IC (180), switches for all the pixels within each of the third cells to be in a first state and switches for all the pixels within each of the fourth cells to be in a second state when an odd numbered update is conducted; and
a fourth control sub-module (524) configured to control, by the driving IC (180), switches for all the pixels within each of the third cells to be in the second state and switches for all the pixels within each of the fourth cells to be in the first state when an even numbered update is conducted,
wherein each pixel is electrically connected to the driving IC (180) through a corresponding enable line and each pixel is electrically connected to a data line through a switch.

11. A device for content displaying, comprising:
a processor (620);
a memory (604) to store instructions executable by the processor;
wherein, the processor is configured to perform a method of any one of claims 1- 5.
